# FASCICULE DE BREVET EUROPEEN

(11) **EP 1 874 421 B1**
(45) Date de publication et mention de la délivrance du brevet: **27.08.2008**
(21) Numéro de dépôt: 06726285.7
(22) Date de dépôt: 29.03.2006
(51) Int. Cl.: B01D 3/32, F25J 3/04

(54) **COLONNE DE DISTILLATION A DISPOSITIF PARE-FEU**
DESTILLATIONSKOLONNE MIT FEUERSCHUTZVORRICHTUNG
DISTILLATION COLUMN WITH FIREBREAK DEVICE

(30) Priorité: 13.04.2005 FR 0550942
(43) Date de publication de la demande: 09.01.2008
(73) Titulaire: L'AIR LIQUIDE, Société Anonyme pour l'Etude et l'Exploitation des Procédés Georges Claude, 75007 Paris (FR)
(72) Inventeur: BERNHARDT, Jean-Marc, F-94000 Creteil (FR); FANO, Emmanuel, F-94210 La Varenne Saint Hilaire (FR); GRIGOLETTO, Philippe, F-77270 Villeparisis (FR); WAGNER, Marc, F-94100 Saint Maur des Fosses (FR)
(74) Mandataire: Mercey, Fiona Susan
(86) Numéro de dépôt international: PCT/FR2006/050270
(87) Numéro de publication internationale: WO 2006/108979

(56) Documents cités:
- FR-A- 2 260 368
- US-A- 4 257 852
- US-B1- 6 833 057

## Description

La présente invention est relative aux colonnes de distillation à dispositif pare-feu, et en particulier, aux colonnes de distillation d'air ayant un tel dispositif.

L'article "Minimize the Risk of Fire During Column Maintenance" de Ender et al. CEP, septembre 2003 explique que la plupart des incendies dans une colonne de distillation sont liées à l'usage de garnissages structurés, en particulier en aluminium.

Les vaporiseurs en aluminium des colonnes d'appareil de séparation d'air peuvent donner lieu à des coups de feu du fait de la combustion locale de l'aluminium des ondes initiée par une accumulation locale d'hydrocarbures .

On considère que la possibilité d'initiation d'une combustion de l'aluminium des garnissages situés au-dessus du vaporiseur est une situation aggravante.

Pour réduire le risque de propagation d'un feu dans le vaporiseur vers les garnissages, on utilise couramment un double fond d'isolement entre le vaporiseur et le garnissage imposant des tuyauteries des liaisons coûteuses extérieures à la colonne. Sinon la colonne peut contenir des modules de garnissage en cuivre juste au-dessus du vaporiseur, solution également coûteuse.

Selon un objet de l'invention, il est prévu une colonne de distillation comprenant
i) des moyens pour amener au moins un mélange à distiller à la colonne
ii) des moyens pour soutirer au moins un fluide enrichi en un composant du mélange de la colonne
iii) à l'intérieur de la colonne, un vaporiseur-condenseur et des moyens pour envoyer un gaz à condenser et un liquide à vaporiser au vaporiseur-condenseur ainsi que des moyens pour retirer le gaz condensé et le liquide vaporisé
iv) au moins un module de garnissages situé au-dessus du vaporiseur-condenseur
**caractérisée en ce qu**'elle comprend au moins une barrière pare feu placée entre le vaporiseur-condenseur et le module de garnissages ainsi que des moyens pour laisser circuler des fluides à l'intérieur de la colonne entre le module et le vaporiseur-condenseur.

Selon d'autres aspects de l'invention, la colonne comprend :
- une première barrière obstruant une première partie de la section de la colonne égale à au moins la moitié de la section et une deuxième barrière obstruant une deuxième partie de la section de la colonne égale à au moins la moitié de la section et recouvrant au plus partiellement la première partie de la section de la colonne, les première et deuxième barrières étant situées entre le vaporiseur-condenseur et le premier module de garnissage au-dessus du vaporiseur-condenseur, la première barrière étant en-dessous de la deuxième barrière.
- au moins une troisième barrière au-dessus de la deuxième barrière et en dessous du premier module de garnissage obstruant une deuxième partie de la section de la colonne égale à au moins la moitié de la section et recouvrant au plus partiellement la deuxième partie de la section de la colonne.
- la deuxième partie de la section recouvre entre 10 et 90 % de la troisième partie de la section.
- la première partie de la section recouvre entre 10 et 90 % de la deuxième partie de la section.
- la (ou la première) barrière et éventuellement la troisième barrière est constituée par un disque coaxial avec la colonne obstruant une première section ayant un rayon égal à entre 50% et 100% du rayon de la colonne au niveau du vaporisateur.
- la deuxième barrière est une barrière annulaire ayant un rayon extérieur substantiellement égal à celui de la colonne au niveau du vaporiseur et ayant un rayon intérieur supérieur à 20 % de celui de la colonne au niveau du vaporiseur.
- les barrières sont au moins partiellement en cuivre ou un alliage de cuivre.
- au moins une barrière, de préférence la plus basse et donc la plus près du vaporiseur, est remplie de billes de céramique, de quartz ou de verre.
- au moins une des barrières est circulaire et/ou au moins une des barrières est annulaire.
- au moins une des barrières est centrée sur l'axe vertical de la colonne.

L'invention comprend également un appareil de distillation d'air comprenant au moins une colonne telle que décrite ci-dessus.

Les garnissages sont de préférence en aluminium ou en cuivre, de type ondulé-croisé, avec ou sans des modifications des bords pour réduire la résistance au passage de gaz.

L'invention sera décrite en plus de détail en se référant aux figures qui suivent, où la figure 1 montre une colonne de distillation incorporant un dispositif pare-feu selon l'invention, la figure 2 montre en détail une des barrières selon l'invention et la figure 3 montre un tuyau de descente de liquide.

La colonne basse pression 1 d'une double colonne de séparation d'air a un rebouilleur de cuve 3 chauffé par de l'azote 25 provenant de la colonne moyenne pression. Le rebouilleur sert à vaporiser le liquide de cuve de la colonne qui est riche en oxygène. Le rebouilleur 3 peut être de tout type connu mais un rebouilleur de type vaporiseur à bain est souvent préféré. La colonne est alimentée par des débits de reflux, y compris un débit de liquide riche 21, et éventuellement par un débit d'air gazeux. L'échange de masse et de chaleur à l'intérieur de la colonne s'effectue par au moins un module de garnissages structurés. Ces garnissages sont de préférence en aluminium et de type ondulé-croisé mais peuvent être de tout type qui convient pour la séparation de l'air, par exemple en cuivre. Le module le plus bas 5 est situé en dessus de l'arrivée de liquide riche 21.

En cuve de colonne est soutiré un débit 23 de liquide riche en oxygène contenant entre 80 et 99,9 mol. % d'oxygène.

Entre le rebouilleur de cuve 3 et le module de garnissages le plus bas 5 est posé un dispositif pare-feu constitué par trois barrières, posées l'une au-dessus de l'autre.

Le diamètre de la colonne basse pression 1 est typiquement de 4,5 m.

La barrière la plus proche du rebouilleur 3 est la barrière 7A qui est une grille supportant un lit de plusieurs couches de billes de céramique, lesquelles présentent l'avantage d'être totalement inertes (ni combustible ni comburant) et de s'écouler par gravité en direction du feu en cas de percement de la grille par un feu du vaporiseur. Ces billes seront de dimension suffisante pour ne pas risquer de boucher des canaux d'échangeur (par exemple de 12,7 mm).

Au-dessus de la barrière 7A est positionnée une barrière 7B chargée de récupérer l'oxygène liquide. Elle est constituée d'une tôle de forme annulaire, ayant un diamètre extérieur substantiellement égal au diamètre de la colonne et un diamètre interne typiquement de 1,5m. Le matériau peut être du cuivre ou du nickel ou leur alliage (cupro nickel ou Monel ®) mais il peut être aussi de l'inox recouvert de céramique ou d'un métal cité précédemment. Cette barrière est fixée à la virole de la colonne 1 par soudage . La barrière 7B comprend un relevé 27 au bord intérieur pour empêcher l'écoulement de liquide sur la barrière 7A. Huit goussets de renfort radiaux 15 s'étendent du bord relevé 27 jusqu'à la virole de la colonne 1. Ces goussets 15 rendent la barrière plus solide et la relient aux barrières 7A et 7C afin de maintenir celles-ci en place. Au pourtour de la barrière 7B sont formées huit ouvertures 13. Le liquide qui tombe au centre de la barrière 7B s'écoule vers l'extérieur de la barrière et est canalisé dans les ouvertures 13. Pour réduire la masse d'oxygène liquide présente sur la barrière 7B, celle ci est remplie de billes de céramique. Optionnellement cette barrière pourra être conique et le relevé 27 sera alors supprimé.

La barrière 7C est de la même forme, des mêmes dimensions et du même matériau que la barrière 7A mais en son centre une tôle pleine typiquement de 2,5 m de diamètre évite au liquide de tomber sur la barrière 7A. Cette barrière 7C est l'ultime barrière et le nombre de couches de billes de céramique peut être plus réduit que dans la barrière 7A.

Il sera compris que l'invention s'applique à toute colonne de distillation utilisant un rebouilleur de cuve et au moins un module de garnissages structurés au-dessus du rebouilleur. En particulier, il s'applique aux colonnes dont la cuve contient un liquide comburant.

Comme il est connu que la propagation ne peut se faire que si la température des produits de combustion est supérieure à 1500°C, on limitera de préférence à trois le nombre de barrières.

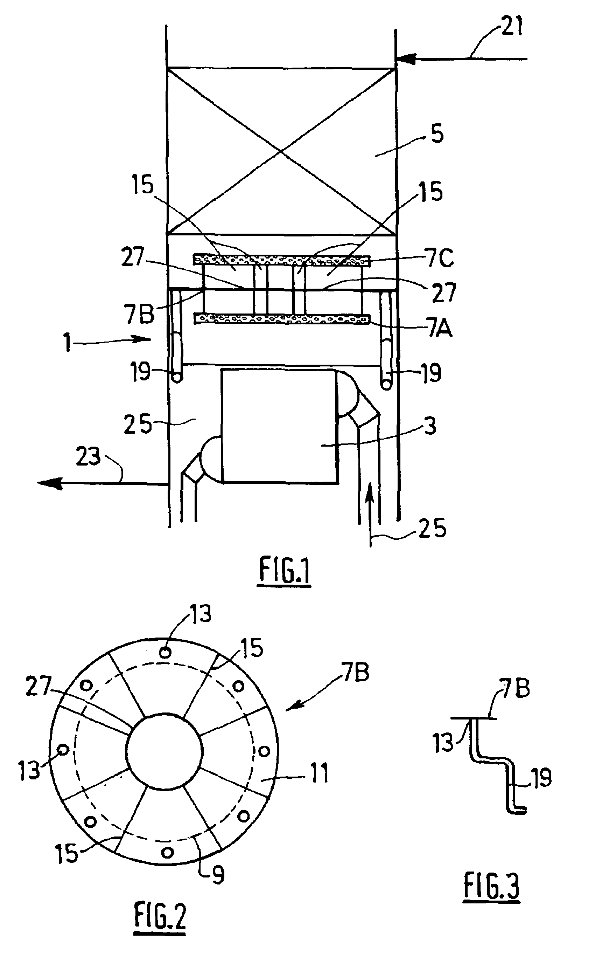

A la Figure 2, le bord extérieur des barrières 7A et 7C en dessous et en dessus de la barrière 7B est montré en pointillé. Cet espace annulaire libre permet de réduire encore les pertes de charge en fonctionnement.

La Figure 3 montre une descente de liquide 19 qui laisse s'écouler le liquide tombant sur la barrière 7B à travers les ouvertures 3. Cette descente 19 dirige le liquide dans le bain de liquide 25. La descente est en forme coudée étant plié à trois endroits différents à un angle de 90°, de sorte que le liquide sort horizontalement. De cette manière, la propagation du coup de feu à travers la descente de liquide est évitée.

Les barrières peuvent être en cuivre ou nickel ou leurs alliages (cupronickel , Monel ® ) pour assurer un maximum de sécurité. Une autre solution peut être un plaquage en alliage cuivre ou de céramique sur un support acier austénitique.

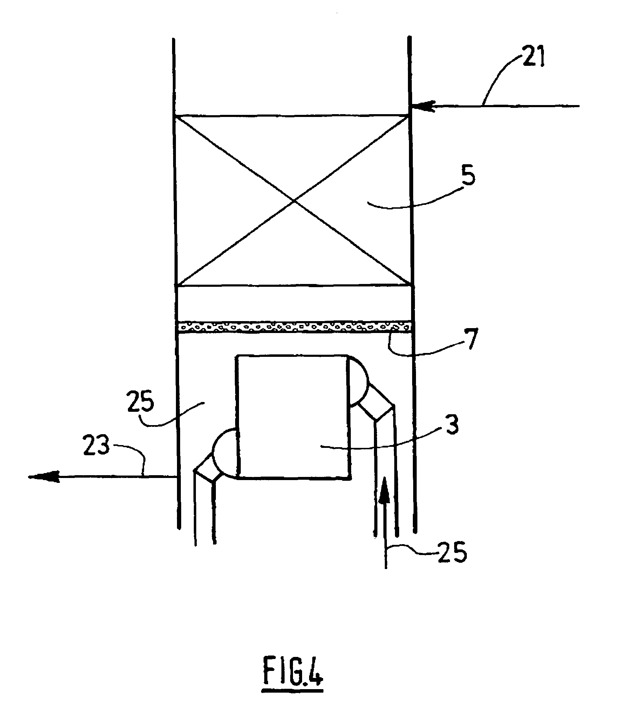

La Figure 4 montre une autre colonne selon l'invention. Ici le pare-feu est constitué par une seule barrière faisant alors le diamètre de la colonne formée de billes en céramique maintenues à l'aide d'une grille. Des billes en verre ou en quartz pourraient également être utilisées. Comme ces matériaux ont une température de fusion très élevée (supérieure à 2000°C pour les céramiques), ceci formerait un écran contre la propagation d'un feu si le nombre de couches est plus important.

Les billes formant un écran de plusieurs centimètres d'épaisseur laissent passer le liquide et le gaz traversant la colonne mais restent inertes. Au cas d'un départ d'un coup de feu, la grille fond ainsi libérant les billes qui tombent dans le foyer. Ces billes seront de dimension suffisante pour ne pas risquer de boucher des canaux d'échangeur (par exemple de 12,7 mm).

D'autres systèmes peuvent être placés entre la barrière de billes de céramiques et le module de garnissages afin de recueillir l'oxygène liquide en laissant passer le gaz comme par exemple des secteurs en forme de tuile renversée placés sur 2 niveaux différents.

## Revendications

1. Colonne de distillation comprenant
i) des moyens (21) pour amener au moins un mélange à distiller à la colonne
ii) des moyens (23) pour soutirer au moins un fluide enrichi en un composant du mélange de la colonne
iii) à l'intérieur de la colonne, un vaporiseur-condenser (3) et des moyens (25) pour envoyer un gaz à condenser et un liquide à vaporiser au vaporiseur-condenseur ainsi que des moyens pour retirer le gaz condensé et le liquide vaporisé
iv) au moins un module de garnissages (5) situé au-dessus du vaporiseur-condenseur
**caractérisée en ce qu'**elle comprend au moins une barrière pare feu (7, 7A, 7B, 7C) placée entre le vaporiseur - condenseur et le module de garnissages ainsi que des moyens pour laisser circuler des fluides à l'intérieur de la colonne entre le module et le vaporiseur-condenseur.

2. Colonne selon la revendication 1 comprenant une première barrière (7A, 7B) obstruant une première partie de la section de la colonne égale à au moins la moitié de la section et une deuxième barrière (7B, 7C) obstruant une deuxième partie de la section de la colonne égale à au moins la moitié de la section et recouvrant au plus partiellement la première partie de la section de la colonne, les première et deuxième barrières étant situées entre le vaporiseur-condenseur (3) et le premier module (5) de garnissage au-dessus du vaporiseur-condenseur, la première barrière étant en dessous de la deuxième barrière.

3. Colonne selon la revendication 2 comprenant au moins une troisième barrière (7C) au-dessus de la deuxième barrière (7B) et en dessous du premier module de garnissage (5), obstruant une deuxième partie de la section de la colonne égale à au moins la moitié de la section et recouvrant au plus partiellement la deuxième partie de la section de la colonne.

4. Colonne selon la revendication 3 dans laquelle la deuxième partie de la section recouvre entre 10 et 90% de la troisième partie de la section.

5. Colonne selon la revendication 2, 3 ou 4 dans laquelle la première partie de la section recouvre entre 10 et 90% de la deuxième partie de la section.

6. Colonne selon la revendication 1 à 4 dans laquelle la (ou la première) barrière (7A) et éventuellement la troisième barrière (7C) est constituée par un disque coaxial avec la colonne obstruant une première section ayant un rayon égal à entre 50% et 100% du rayon de la colonne au niveau du vaporiseur.

7. Colonne selon la revendication 6 dans laquelle la deuxième barrière (7B) est une barrière annulaire ayant un rayon extérieure substantiellement égal à celui de la colonne au niveau du vaporiseur (3) et ayant un rayon intérieur substantiellement supérieur à 20% de celui de la colonne au niveau du vaporiseur.

8. Colonne selon l'une des revendications précédentes dans laquelle les barrières (7, 7A, 7B, 7C) sont au moins partiellement en cuivre ou un alliage de cuivre.

9. Colonne selon l'une des revendications précédentes dans laquelle au moins une barrière, de préférence la plus basse (7, 7A) et donc la plus près du vaporiseur, est remplie de billes de céramique, ou de quartz ou de verre.

10. Colonne selon l'une des revendications précédentes dans laquelle au moins une des barrières est circulaire (7, 7A, 7C) et/ou au moins une des barrières est annulaire.

11. Colonne selon la revendication 10 dans laquelle au moins une des barrières (7, 7A, 7B, 7C) est centrée sur l'axe vertical de la colonne.

12. Appareil de distillation d'air comprenant au moins une colonne (1) selon l'une des revendications 1 à 11.

## Claims

1. Distillation column comprising
i) means (21) for conveying at least one mixture to be distilled to the column
ii) means (23) for withdrawing at least one fluid enriched with a component of the mixture from the column
iii) inside the column, a vaporizer-condenser (3) and means (25) for sending a gas to be condensed and a liquid to be vaporized to the vaporizer-condenser and means for withdrawing the condensed gas and the vaporized liquid
iv) at least one packing module (5) located above the vaporizer-condenser
**characterized in that** it comprises at least one fire barrier (7, 7A, 7B, 7C) placed between the vaporizer-condenser and the packing module and means for allowing fluids to flow in the column between the module and the vaporizer-condenser.

2. Column according to Claim 1, comprising a first barrier (7A, 7B) obstructing a first part of the cross section of the column equal to at least half of the cross section and a second barrier (7B, 7C) obstructing a second part of the cross section of the column equal to at least half of the cross section and at least partially overlapping the first part of the cross section of the column, the first and second barriers being located between the vaporizer-condenser (3) and the first packing module (5) above the vaporizer-condenser, the first barrier being below the second barrier.

3. Column according to Claim 2, comprising at least one third barrier (7C) above the second barrier (7B) and below the first packing module (5), obstructing a second part of the cross section of the column equal to at least half of the cross section and at least partially overlapping the second part of the cross section of the column.

4. Column according to Claim 3, in which the second part of the cross section overlaps between 10 and 90% of the third part of the cross section.

5. Column according to Claim 2, 3 or 4, in which the first part of the cross section overlaps between 10 and 90% of the second part of the cross section.

6. Column according to Claims 1 to 4, in which the (or the first) barrier (7A) and optionally the third barrier (7C) consists of a disc coaxial with the column obstructing a first cross section having a radius equal to between 50% and 100% of the radius of the column at the level of the vaporizer.

7. Column according to Claim 6, in which the second barrier (7B) is an annular barrier having an outside radius substantially equal to that of the column at the level of the vaporizer (3) and having an inside radius substantially higher than 20% of that of the column at the level of the vaporizer.

8. Column according to one of the preceding claims, in which the barriers (7, 7A, 7B, 7C) are at least partially made from copper or an alloy thereof.

9. Column according to one of the preceding claims, in which at least one barrier, preferably the lowest (7, 7A) and therefore the one closest to the vaporizer, is filled with beads of ceramic or quartz or glass.

10. Column according to one of the preceding claims, in which at least one of the barriers is circular (7, 7A, 7C) and/or at least one of the barriers is annular.

11. Column according to Claim 10, in which at least one of the barriers (7, 7A, 7B, 7C) is centred on the vertical axis of the column.

12. Air distillation apparatus comprising at least one column (1) according to one of Claims 1 to 11.

## Patentansprüche

1. Destillationskolonne, umfassend
i) Mittel (21), um der Kolonne mindestens ein zu destillierendes Gemisch zuzuführen
ii) Mittel (23), um der Kolonne mindestens ein Fluid zu entziehen, das mit einer Komponente des Gemischs angereichert ist
iii) im Inneren der Kolonne, einen Verdampfer/Kondensator (3) und Mittel (25), um dem Verdampfer/Kondensator ein zu kondensierendes Gas und eine zu verdampfende Flüssigkeit zuzuführen, sowie Mittel, um das kondensierte Gas und die verdampfte Flüssigkeit zu entziehen
iv) mindestens ein Auskleidungsmodul (5), das über dem Verdampfer/Kondensator angeordnet ist
**dadurch gekennzeichnet, dass** sie mindestens eine Feuerschutzbarriere (7, 7A, 7B, 7C) umfasst, die zwischen dem Verdampfer/Kondensator und dem Auskleidungsmodul angeordnet ist, sowie Mittel, um Fluide im Inneren der Kolonne zwischen dem Modul und dem Verdampfer/Kondensator umlaufen zu lassen.

2. Kolonne nach Anspruch 1, umfassend eine erste Barriere (7A, 7B), die einen ersten Teil des Abschnitts der Kolonne versperrt, der mindestens der Hälfte des Abschnitts entspricht, und eine zweite Barriere (7B, 7C), die einen zweiten Teil des Abschnitts der Kolonne versperrt, der mindestens der Hälfte des Abschnitts entspricht und insbesondere den ersten Teil des Abschnitts der Kolonne bedeckt, wobei die erste und zweite Barriere zwischen dem Verdampfer/Kondensator (3) und dem ersten Auskleidungsmodul (5) über dem Verdampfer/Kondensator angeordnet sind, wobei die erste Barriere unter der zweiten Barriere angeordnet ist.

3. Kolonne nach Anspruch 2, umfassend mindestens eine dritte Barriere (7C) über der zweiten Barriere (7B) und unter dem ersten Auskleidungsmodul (5), die einen zweiten Teil des Abschnitts der Kolonne versperrt, der mindestens der Hälfte des Abschnitts entspricht und mindestens den zweiten Teil des Abschnitts der Kolonne bedeckt.

4. Kolonne nach Anspruch 3, wobei der zweite Teil des Abschnitts zwischen 10 und 90% des dritten Teils des Abschnitts bedeckt.

5. Kolonne nach Anspruch 2, 3 oder 4, wobei der erste Teil des Abschnitts zwischen 10 und 90% des zweiten Teils des Abschnitts bedeckt.

6. Kolonne nach Anspruch 1 bis 4, wobei die (oder die erste) Barriere (7A) und eventuell die dritte Barriere (7C) aus einer Scheibe besteht, die koaxial zur Kolonne ist und einen ersten Abschnitt versperrt, dessen Radius zwischen 50% und 100% des Radius der Kolonne auf der Höhe der Verdampfers beträgt.

7. Kolonne nach Anspruch 6, wobei die zweite Barriere (7B) eine ringförmige Barriere ist, deren Außenradius im Wesentlichen dem der Kolonne auf der Höhe der Verdampfers (3) entspricht und deren Innenradius im Wesentlichen um 20% größer ist als der der Kolonne auf der Höhe der Verdampfers.

8. Kolonne nach einem der vorherigen Ansprüche, wobei die Barrieren (7, 7A, 7B, 7C) mindestens teilweise aus Kupfer oder einer Kupferlegierung bestehen.

9. Kolonne nach einem der vorherigen Ansprüche, wobei mindestens eine Barriere, bevorzugt die unterste (7, 7A) und demnach diejenige, die dem Verdampfer am nächsten liegt, mit Keramik-, Quarz- oder Glaskugeln gefüllt ist.

10. Kolonne nach einem der vorherigen Ansprüche, wobei mindestens eine der Barrieren (7, 7A, 7C) kreisförmig ist und/oder mindestens eine der Barrieren ringförmig ist.

11. Kolonne nach Anspruch 10, wobei mindestens eine der Barrieren (7, 7A, 7B, 7C) auf der Vertikalachse der Kolonne zentriert ist.

12. Vorrichtung zur Luftdestillation, umfassend mindestens eine Kolonne (1) nach einem der Ansprüche 1 bis 11.
